# FASCICULE DE BREVET EUROPEEN

(11) **EP 3 699 695 B1**
(45) Date de publication et mention de la délivrance du brevet: **06.07.2022**
(21) Numéro de dépôt: 19159125.4
(22) Date de dépôt: 25.02.2019
(51) Int. Cl.: G04B 45/00, G04B 19/10, G04B 19/12, G04B 19/18, G04B 37/22, B44C 1/22, B44C 1/26, B44C 3/10, B44C 3/12, A44C 27/00

(54) **COMPOSANT MULTIDECORS ET/OU MULTICOLORE D'HORLOGERIE AVEC STRUCTURE EN CÉRAMIQUE**
KOMPONENTE MIT MEHREREN VERZIERUNGEN UND/ODER MEHREREN FARBEN EINES UHRWERKS MIT KERAMIKSTRUKTUR
MULTI-DECOR AND/OR MULTI-COLOUR CLOCK PIECE COMPONENT WITH CERAMIC STRUCTURE

(43) Date de publication de la demande: 26.08.2020
(73) Titulaire: Comadur S.A., 2400 Le Locle (CH)
(72) Inventeur: NETUSCHILL, Alexandre, 2414 Le Cerneux-Péquignot (CH); BONTAZ, Fabien, 2615 Sonvilier (CH)
(74) Mandataire: ICB SA

(56) Documents cités:
- EP-A1- 2 856 903
- EP-A1- 3 126 914
- CH-A1- 713 871
- CH-A2- 710 494

## Description

### Domaine de l'invention

L'invention concerne un procédé de fabrication d'un composant d'horlogerie comportant une structure en un premier matériau qui est un matériau dur ou une céramique, laquelle structure comporte, dans son épaisseur, au moins un insert primaire constitué par un deuxième matériau d'aspect différent dudit premier matériau.

L'invention concerne le domaine des composants d'horlogerie en matériaux durs, notamment en céramique, et leur réalisation.

### Arrière-plan de l'invention

La décoration d'objets en matériaux durs, voire très durs, comme de la céramique, est difficile à réaliser, et se borne en général à une déposition en surface d'un décor par tampographie, sérigraphie, digital printing. Pour des composants horlogers, les petites dimensions compliquent de telles opérations.

De plus, la déposition en surface de polymères n'offre pas les garanties de tenue à l'usure exigées dans l'industrie horlogère. Pour pallier ce défaut, il est possible de réaliser une cavité en profondeur dans le composant, puis de remplir cette cavité avec un matériau idoine, par exemple un polymère coloré ou une laque, de sorte à obtenir un décor sensiblement au même niveau ou en-dessous de la matière du décor. Toutefois une telle réalisation ne permet de remplir proprement et avec une résolution acceptable qu'avec un seul type de laque, donc un seul type de décor, notamment une seule couleur.

Le document EP2856903A1 au nom de RADO décrit un procédé de fabrication d'un élément céramique incrusté d'une pièce d'horlogerie comportant les étapes suivantes : a) former un corps en céramique ; b) graver au moins un évidement dans une face du corps en céramique, chaque au moins un évidement formant l'empreinte d'un décor; c) modifier l'état de surface du fond dudit au moins un évidement afin d'augmenter sa surface de contact; d) déposer, par projection thermique, une deuxième céramique par-dessus ledit au moins un évidement afin de remplir totalement ledit au moins un évidement; e) aplanir ladite deuxième céramique afin de n'en laisser que dans le creux dudit au moins un évidement.

Le document CH713871A1 au nom de RICHEMONT décrit un composant pour pièce d'horlogerie présentant une pluralité d'éléments graphiques, le composant comprenant un substrat dont au moins une portion est recouverte d'un revêtement comprenant une pluralité de couches, incluant une couche externe et au moins une couche intermédiaire formée entre le substrat et la couche externe, la couche intermédiaire ayant un aspect différent de celui de la couche externe; le revêtement comprenant au moins une première ouverture définissant un premier élément graphique, la première ouverture ayant une première profondeur laissant apparaître la couche intermédiaire; et une seconde ouverture définissant un deuxième élément graphique, la seconde ouverture ayant une deuxième profondeur différente de la première profondeur; de sorte que le composant comporte au moins deux éléments graphiques ayant un aspect différent l'un de l'autre.

Le document CH710494A2 au nom de RUBATTEL & WEYERMANN décrit un procédé de fabrication d'un article décoré comportant les étapes suivantes: a) former au moins un évidement de la forme d'un futur décor dans une surface visible d'un substrat ; b) remplir totalement ledit au moins un évidement d'un matériau au moins partiellement transparent; c) retirer tout matériau de ladite surface visible afin de laisser ledit matériau au moins partiellement transparent uniquement dans ledit au moins un évidement et former une surface visible décorée sans relief.

### Résumé de l'invention

L'invention se propose de réaliser un décor, notamment en matériau polymère, laque époxy, acrylique, ou similaire dans des cavités creusées dans des matériaux durs tels que des céramiques avec plusieurs zones de couleurs et/ou d'aspects différents. L'invention vise à résoudre le problème de la décoration multiple en aménageant, dans une première zone remplie de laque ou similaire, une seconde ou d'additionnelles zones qui pourront être remplies à leur tour de matériaux similaires tout en étant d'aspects différents au moins deux à deux.

L'invention doit notamment permettre de réaliser un décor en polymère (laque époxy, acrylique, SLN, ou similaire) ou en combiné métal-polymère dans des cavités creusées dans des matériaux durs avec plusieurs zones de couleur.

A cet effet, l'invention concerne un procédé de fabrication d'un composant d'horlogerie selon la revendication 1.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en vue en plan, un composant d'horlogerie comportant une structure en métal dur ou en céramique, dans laquelle sont insérés des inserts portant des décors et/ou des coloris différents de cette structure; un insert primaire est noyé dans la structure, un insert secondaire est noyé dans l'insert primaire ; deux inserts tertiaires en forme de petites étoiles sont noyés dans l'insert secondaire, un autre insert tertiaire en forme de plus grand étoile est inséré entre cuir et chair à la fois dans l'insert primaire et l'insert secondaire ;
- les figures 2 à 6 représentent, en coupe transversale, des étapes successives de fabrication d'un insert primaire en forme de disque formé dans un premier logement usiné dans cette structure, puis d'un insert secondaire en forme d'arc formé dans un deuxième logement réalisé dans cet insert primaire ;
- la figure 7 est une coupe de la figure 1 traversant différents inserts, selon le trait de coupe de la figure 1 ;
- la figure 8 représente, de façon similaire à la figure 1, un autre exemple de composant avec un insert secondaire logé entre cuir et chair entra la structure et l'insert primaire, de la même façon que l'insert tertiaire en forme de plus grand étoile de la figure 1 est inséré entre cuir et chair à la fois dans l'insert primaire et l'insert secondaire, et les figures 9 et 10 illustrent, de façon similaire aux figures 2 à 6, l'usinage d'un logement ménagé à la fois dans la structure et l'insert primaire, pour y former cet insert secondaire ;

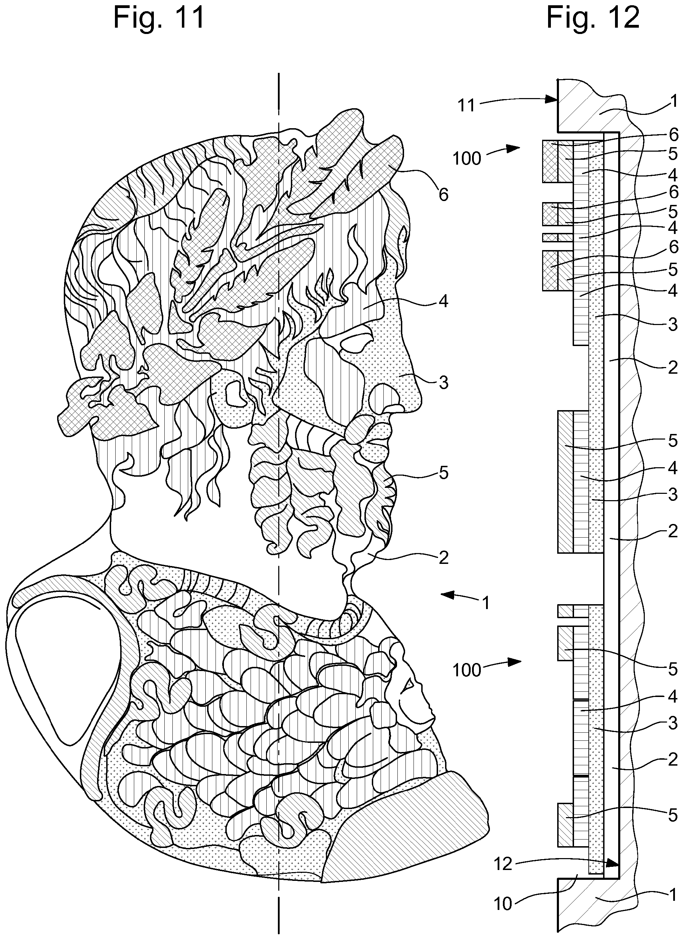

- les figures 11 et 12 représentent, respectivement en vue en plan et en coupe, la réalisation d'un décor de type camée en bas-relief dans une structure qui a été creusée et remplie d'inserts, soit ménagés les uns dans les autres dans des cavités successives dont on ne voit plus trace sur la figure 12 sur laquelle un détourage périphérique de I0'ensemble du décor a été effectué, soit au moins partiellement superposés les uns aux autres dans une cavité de la structure ou de l'insert primaire dans le cas présent ; la gravure effectuée à différentes profondeurs révèle el décor propre à chaque couche, exactement comme un camée en coquillage naturel ; dans cet exemple on enlève entièrement une couche pour visualiser la suivante dans toute son épaisseur ;
- la figure 13 représente, de façon similaire à la figure 12, une variante avec des inserts sensiblement parallèles superposés dans une même cavité, et gravés de façon tridimensionnelle selon un profil gauche, combinant à la fois la révélation du décor propre à chaque couche, et un volume en ronde-bosse ;
- la figure 14 représente, de façon similaire à la figure 13, une variante avec des inserts d'épaisseurs non constantes, dans lesquels sera gravé un profil tridimensionnel représenté en ligne brisée ;
- la figure 15 représente, de façon similaire à la figure 13, une variante avec des inserts encastrés les uns dans les autres, dans lesquels sera gravé un profil tridimensionnel représenté en ligne brisée ;
- la figure 16 représente, en vue de face, un composant d'affichage avec une bordure très fine d'un chiffre difficilement réalisable par d'autres procédés ;
- la figure 17 représente, de façon similaire à la figure 1, un composant décoré d'anneaux olympiques, chacun de la couleur officielle, partiellement encastrés les uns dans les autres et tous noyés dans la structure, et la figure 18 est une coupe de cette réalisation ;
- la figure 19 représente, de façon similaire à la figure 13, un exemple d'un insert primaire qui est plus profond à sa périphérie que dans sa zone centrale, de façon à garantir une très bonne tenue mécanique ;
- la figure 20 représente, de façon similaire à la figure 13, un exemple d'un insert primaire d'épaisseur variable ;
- la figure 21 représente, de façon similaire à la figure 13, différentes variantes d'exécution montrant les différents niveaux relatifs entre les surfaces supérieures des différents inserts : en retrait, à fleur, en saillie ; les images L, M, P illustrent des composants finis avec une surface visible continue, voire rectifiée ou polie dans le cas de l'image P, les images C, E, G, I, J, K, N, O, montrent des surfaces d'inserts en retrait de la surface de la structure, et les images B, H montrent un insert saillant au-dessus de la surface de la structure.

### Description détaillée des modes de réalisation préférés

L'invention concerne un procédé de fabrication d'un composant 100 d'horlogerie tel que défini dans la revendication 1 annexée.

Plus particulièrement, la structure 1 comporte au moins un insert tertiaire 4, qui est inséré dans le premier matériau ou/et dans le deuxième matériau ou/et dans le troisième matériau, et qui est constitué par un quatrième matériau d'aspect différent du premier matériau ou/et du deuxième matériau ou/et du troisième matériau.

Plus particulièrement, la structure 1 comporte une pluralité d'inserts élémentaires insérés au moins partiellement les uns dans les autres et remplis de matériaux d'aspect différent deux à deux.

Dans une réalisation particulière, au moins un insert élémentaire est inséré entre cuir et chair, ou bien à la fois dans la structure 1 et dans au moins un autre insert élémentaire, ou bien à la fois dans au moins deux autres inserts élémentaires.

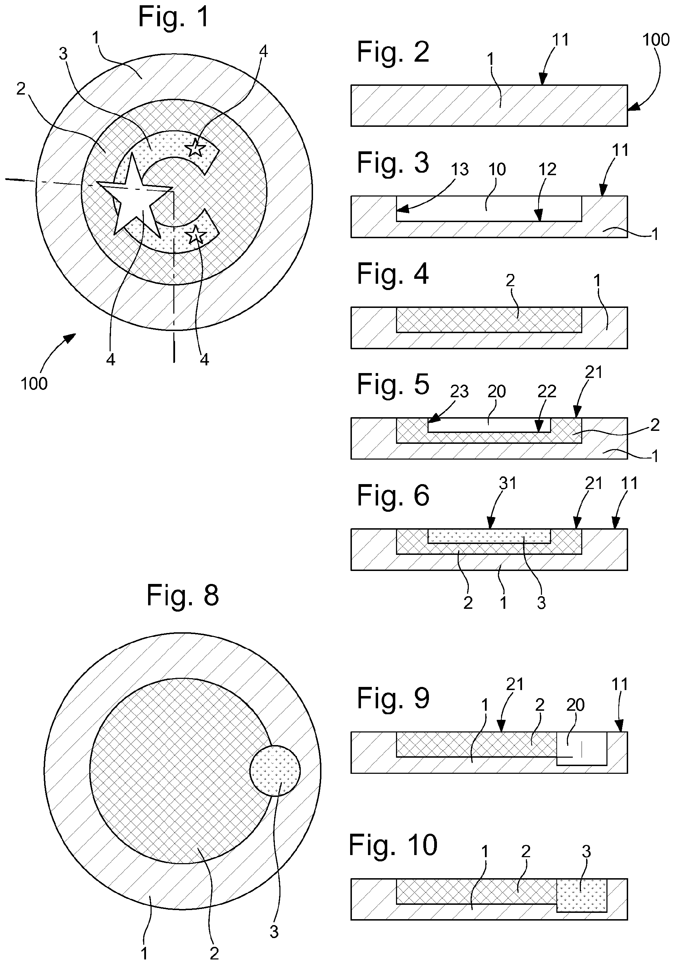

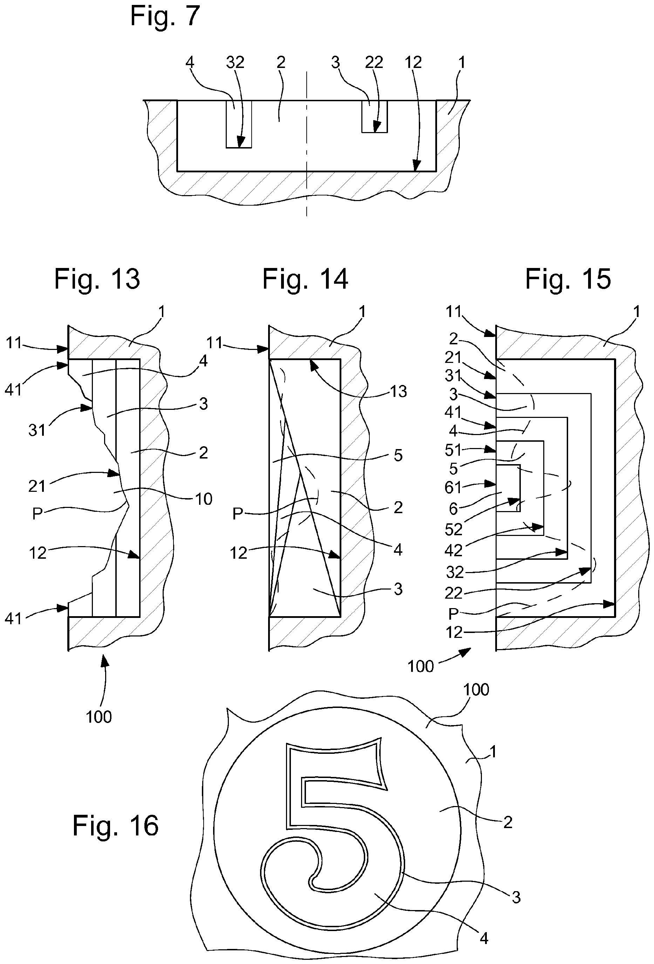

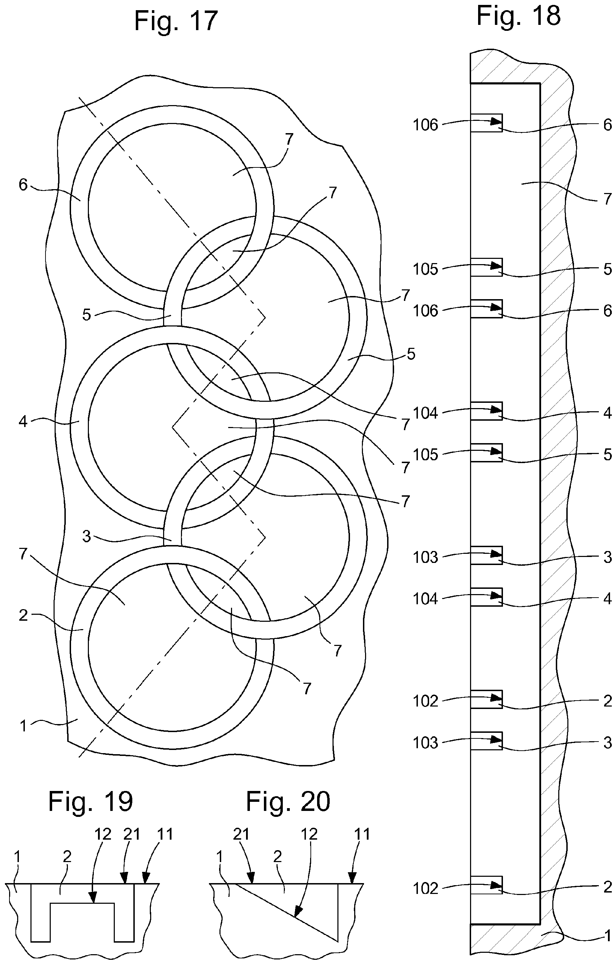

On comprend que l'invention permet de réaliser tout type de décor, et notamment et non limitativement une structure gigogne avec des inserts inclus les uns dans les autres comme celles représentées sur les figures 6 et 15, ou bien une structure comportant des zones de décor se chevauchant, comme par exemple le décor d'anneaux olympiques visible en figures 17 et 18, et qui comporte cinq inserts 2, 3, 4, 5, 6, en forme d'anneaux et chacun d'une couleur, insérés dans un insert primaire 7 formant le fond, qui est lui-même inséré dans la structure 1, ou autre.

La figure 19 montre un exemple d'un insert primaire 2 qui est plus profond à sa périphérie que dans sa zone centrale, de façon à garantir une très bonne tenue mécanique.

Dans un cas particulier, les surfaces visibles des inserts que comporte le composant 100 constituent un bas-relief, tel que visible par exemple sur les figures 11 et 12, qui représentent une gravure de type camée, avec des couches successives d'aspect différent, révélées par la gravure, comme lors de la gravure d'un coquillage; le bord des inserts successifs intégrés l'un dans l'autre n'est ici pas représenté, une saignée périphérique délimitant l'ensemble du camée par rapport à la structure 1 de fond. Ces couches successives peuvent consister en des inserts imbriqués l'un dans l'autre, et/ou en des inserts simplement superposés l'un à l'autre. Un tel décor est particulièrement approprié pour un cadran, ou pour un fond de boîte, ou similaire. La figure 12 représente une gravure simple du camée, avec des niveaux parallèles, mais des gravures selon des surfaces gauches peuvent naturellement être réalisées, selon un profil gauche P, tel que visible sur les figures 13, 14, ou 15. Le remplissage des cavités successives n'est pas nécessairement parallèle aux surfaces frontale ou au fond des cavités, les figures 14 et 20 montrent des exemples de remplissage d'épaisseur variable.

Dans une variante particulière, la surface visible d'au moins un insert que comporte le composant 100 est en retrait par rapport au niveau local de la surface visible 11 de la structure 1; plus particulièrement encore, les surfaces visibles des inserts que comporte le composant 100 sont chacune en retrait par rapport au niveau local de la surface visible 11 de la structure 1.

Dans une autre variante particulière, la surface visible d'au moins un insert que comporte le composant 100 affleure au niveau local de la surface visible 11 de la structure 1; plus particulièrement encore, les surfaces visibles des inserts que comporte le composant 100 affleurent au niveau de la surface visible 11 de la structure 1.

Dans une autre encore variante particulière, la surface visible d'au moins un insert que comporte le composant 100 est saillante par rapport au niveau local de la surface visible 11 de la structure 1; plus particulièrement encore, les surfaces visibles des inserts que comporte le composant 100 sont chacune saillante par rapport au niveau local de la surface visible 11 de la structure 1.

Un tel composant 100 comportant au moins un insert superficiel comportant un relief saillant au-dessus de la surface visible 11 de la structure 1 constitue avantageusement un élément d'affichage ou/et un élément à tact pour une identification tactile par l'utilisateur, et/ou pour une préhension facile par l'utilisateur, par exemple dans le cas d'une lunette, d'une couronne, d'un poussoir, d'une targette, d'un fermoir, ou autre.

Dans une réalisation particulière, le deuxième matériau est un matériau dur ou une céramique. Dans ce cas la réalisation d'une ouverture dans ce deuxième matériau est faite avantageusement par un moyen laser.

Dans une réalisation particulière, le matériau d'au moins un insert, que comporte le composant 100, est un polymère ou une résine époxy ou une résine acrylate ou une résine chargée d'alumine ou une résine chargée de zircone. Plus particulièrement encore, le matériau de chaque insert, que comporte le composant 100, est un polymère ou une résine époxy ou une résine acrylate ou une résine chargée d'alumine ou une résine chargée de zircone.

Dans une réalisation particulière, le matériau d'au moins un insert, que comporte le composant 100, est un émail. Plus particulièrement encore, le matériau de chaque insert, que comporte le composant 100, est un émail.

Dans une réalisation particulière, le composant 100 comporte au moins un insert en matériau transparent ou translucide.

Dans une réalisation particulière, le composant 100 comporte au moins un insert superficiel recouvrant au moins un autre insert, et plus particulièrement tous les autres inserts, de ce composant 100, lequel insert superficiel est en matériau transparent ou translucide.

Dans une réalisation particulière, la surface visible du composant 100 est constituée par la surface visible 11 de la structure 1, et par la surface visible de chaque insert superficiel en matériau transparent ou translucide qui affleure au niveau de la surface visible 11 de la structure 1.

Dans une réalisation particulière, le composant 100 comporte au moins un insert réfléchissant la lumière.

Dans une réalisation particulière, le composant 100 comporte au moins un insert fluorescent ou phosphorescent.

Naturellement il est possible de combiner, sur un même composant 100, différents types d'inserts parmi ceux listés ci-dessus.

On comprend que, si le composant 100 est avantageusement un composant d'habillage, il peut également constituer un composant de structure d'un mouvement d'horlogerie, ou d'un mécanisme additionnel, tel qu'une platine, un pont, une masse oscillante, un balancier, une masse inertielle, une cage de tourbillon ou de carrousel, ou tout autre composant fonctionnel et pas seulement décoratif.

Dans une réalisation particulière, le composant 100 est une lunette de montre ou une boîte de montre ou un fond de montre ou une couronne de montre ou un poussoir de montre ou une glace de montre ou un élément de bracelet de montre ou un fermoir de bracelet de montre ou une corne de montre.

Par exemple, le composant 100 peut être une lunette de montre en céramique sombre, par exemple noire, avec une laque rouge dans un quadrant, et les différents index et affichages en laque blanche.

L'invention concerne un procédé de fabrication d'un composant 100 hétérogène d'horlogerie, selon la revendication 1 annexée.

Plus particulièrement, on réalise dans l'épaisseur du premier matériau ou/et du deuxième matériau ou/et du troisième matériau au moins une cavité tertiaire 30, qu'on remplit totalement ou partiellement d'un quatrième matériau d'aspect différent du premier matériau ou/et du deuxième matériau ou/et du troisième matériau, pour réaliser un insert tertiaire 4.

Plus particulièrement, on réalise une pluralité de chambres élémentaires, dans la structure 1 et au moins une partie d'inserts déjà réalisés, et on remplit les chambres élémentaires de matériaux à chaque fois d'aspect différent de celui des surfaces limitrophes de la structure 1 ou des inserts, pour constituer une pluralité d'inserts élémentaires insérés au moins partiellement les uns dans les autres et remplis de matériaux d'aspect différent deux à deux.

Dans une réalisation particulière, on réalise au moins une chambre entre cuir et chair, ou bien à la fois dans la structure 1 et dans au moins un insert déjà réalisé, ou bien à la fois dans au moins deux autres inserts déjà réalisés.

Dans une réalisation particulière, on grave les surfaces visibles des inserts réalisés dans le composant 100 pour constituer un bas-relief. Plus particulièrement, on dépose des couches successives d'inserts, d'aspect différent ou de couleurs différentes, qu'on grave en final à des profondeurs différentes pour révéler le schéma final.

On comprend en effet que les inserts peuvent être chacun crousé pour recevoir un autre insert, mais aussi, dans certaines configurations, superposés dans un même logement de la structure ou d'un autre insert.

Dans une réalisation particulière, on usine la surface visible d'au moins un insert que comporte le composant 100 en retrait par rapport au niveau local de la surface visible 11 de la structure 1; plus particulièrement encore, on usine les surfaces visibles des inserts que comporte le composant 100 chacune en retrait par rapport au niveau local de la surface visible 11 de la structure 1.

Dans une réalisation particulière, on usine la surface visible d'au moins un insert que comporte le composant 100 affleurant au niveau local de la surface visible 11 de la structure 1; plus particulièrement encore, on usine les surfaces visibles des inserts que comporte le composant 100 affleurant au niveau de la surface visible 11 de la structure 1.

Dans une autre encore réalisation particulière, on usine la surface visible d'au moins un insert que comporte le composant 100 saillante par rapport au niveau local de la surface visible 11 de la structure 1; plus particulièrement encore, on usine les surfaces visibles des inserts que comporte le composant 100 chacune saillante par rapport au niveau local de la surface visible 11 de la structure 1.

Dans une réalisation particulière, on choisit comme deuxième matériau un matériau dur ou une céramique.

Dans une réalisation particulière, on choisit le matériau d'au moins un insert, comportant un polymère ou une résine époxy ou une résine acrylate ou une résine chargée d'alumine ou une résine chargée de zircone. Plus particulièrement, on choisit le matériau de chaque insert réalisé dans le composant 100, comportant un polymère ou une résine époxy ou une résine acrylate ou une résine chargée d'alumine ou une résine chargée de zircone.

Dans une réalisation particulière, on choisit le matériau d'au moins un insert réalisé dans le composant 100 constitué par un émail. Plus particulièrement, on choisit le matériau de chaque insert réalisé dans le composant 100 constitué par un émail.

Dans une réalisation particulière, on choisit un matériau transparent ou translucide pour au moins un insert superficiel visible par l'utilisateur et recouvrant au moins un autre insert, plus particulièrement tous les autres inserts, du composant 100.

Dans une réalisation particulière, on choisit pour au moins un insert un matériau réfléchissant la lumière.

Dans une réalisation particulière, on choisit pour au moins un insert un matériau fluorescent ou phosphorescent.

Dans une réalisation particulière, on réalise au moins la finition de chaque cavité avec un laser picoseconde et/ou femtoseconde et/ou attoseconde. Plus particulièrement, on réalise toute la cavité avec un laser picoseconde et/ou femtoseconde et/ou attoseconde.

Dans une autre réalisation, et quand le matériau de l'insert le permet, on usine la cavité par usinage traditionnel à l'outil et/ou à la meule, ou en électroérosion, ou autre.

Selon l'invention telle que définie dans la revendication 1 annexée, on réalise au moins une cavité primaire 10 lors de la réalisation de la structure 1, et on laisse le fond de cette cavité primaire 10 brut avant son remplissage par le deuxième matériau.

Selon l'invention telle que définie dans la revendication 1 annexée, on effectue une reprise d'usinage ou d'usinage laser de la seule périphérie de cette cavité primaire 10 dont le fond est laissé brut, avant son remplissage par le deuxième matériau.

Plus particulièrement, on réalise un usinage superficiel, du côté visible par l'utilisateur, de chaque surface visible de chaque insert réalisé.

Une séquence particulière consiste à effectuer successivement les étapes suivantes :
1. Réalisation d'une lunette en céramique par procédé standard (pressage de poudre céramique, frittage, usinage, polissage)
2. Réalisation de cavités, typiquement à l'aide d'un laser femtoseconde et/ou picoseconde
3. Remplissage des cavités avec un polymère de type résine époxy ou acrylate ou résine chargée d'alumine ou de zircone d'une première couleur
4. Polymérisation du polymère
5. Optionnellement mise à niveau par usinage et polissage
6. Réalisation de cavités dans le polymère, à l'aide d'un laser femtoseconde et/ou picoseconde
7. Remplissage des nouvelles cavités avec un polymère de type résine époxy ou acrylate ou résine chargée d'alumine ou de zircone d'une seconde couleur.
8. Polymérisation du polymère
9. Optionnellement mise à niveau par usinage et polissage
10. Optionnellement répéter l'opération pour apporter des couleurs additionnelles

Une autre séquence consiste à effectuer les étapes suivantes :
1. Réalisation d'une lunette en céramique par procédé standard (pressage de poudre céramique, frittage, usinage, polissage)
2. Réalisation de cavités, à l'aide d'un laser (picoseconde et/ou femtoseconde)
3. Remplissage des cavités avec un polymère de type résine époxy ou acrylate ou SLN ou résine chargée d'alumine ou de zircone d'une première couleur
4. Polymérisation du polymère
5. Ou remplissage des cavités avec du métal amorphe (procédé « liquidmetal »), de l'or électroformé (procédé « Ceragold »)
6. Ou déposition d'une couche PVD (par ex. nitrure de chrome)
7. Optionnellement mise à niveau par usinage et polissage
8. Réalisation de cavités dans le premier polymère ou le métal amorphe ou l'or ou la couche PVD + substrat, à l'aide d'un laser (picoseconde et/ou femtoseconde)
9. Remplissage des nouvelles cavités avec un second polymère de type résine époxy ou acrylate ou SLN ou résine chargée d'alumine ou de zircone d'une seconde couleur.
10. Polymérisation du second polymère
11. Optionnellement mise à niveau par usinage et polissage
12. Optionnellement répéter à partir de l'opération 8 pour apporter des couleurs additionnelles

La figure 1 illustre un composant 100 avec une structure 1 en zircone, un insert primaire 2 dans un premier polymère, un insert secondaire 3 dans un deuxième polymère, et trois inserts tertiaires 4 dans un troisième polymère. Les figures 2 à 6 illustrent la réalisation de l'insert primaire et de l'insert secondaire :
- figure 2 : ébauche de la structure 1, par exemple par frittage de céramique ;
- figure 3 : ouverture au laser d'une première cavité 10, avec un fond 12 et une surface périphérique 13 ;
- figure 4 : remplissage de la première cavité 10 avec le premier polymère, et polymérisation ;
- figure 5 : ouverture au laser ou par usinage d'une deuxième cavité 20 dans l'insert primaire 2 formé par la polymérisation du premier polymère et qui comporte une surface visible 21, cette deuxième cavité 20 comportant une surface de fond 22 et un contour périphérique 23;
- figure 6 : remplissage de la deuxième cavité 20 avec le deuxième polymère, et polymérisation pour former l'insert secondaire 3 qui comporte une surface visible 31.

Les inserts tertiaires 4 sont réalisés de façon analogue, sont ménagés dans des logements 40 de fond 42, et comportent au moins une surface visible 41.

La figure 15 illustre encore d'autres inserts successifs :
- 5 dans un logement de fond 52, avec une surface visible 51, et
- 6 dans un logement de fond 62, avec une surface visible 61.

La figure 8 illustre un composant avec un insert secondaire 10 entre cuir et chair avec la structure 1 d'une part, et un insert primaire 2 d'autre part. après la réalisation de l'insert primaire 2 selon les figures 1 à 4, la figure 9 montre l'ouverture au laser ou par usinage d'une deuxième cavité 20 à la fois dans l'insert primaire 2 et dans la structure 1. La figure 10 montre, comme la figure 6, le remplissage de la deuxième cavité 20 avec le deuxième polymère, et polymérisation pour former l'insert secondaire 3.

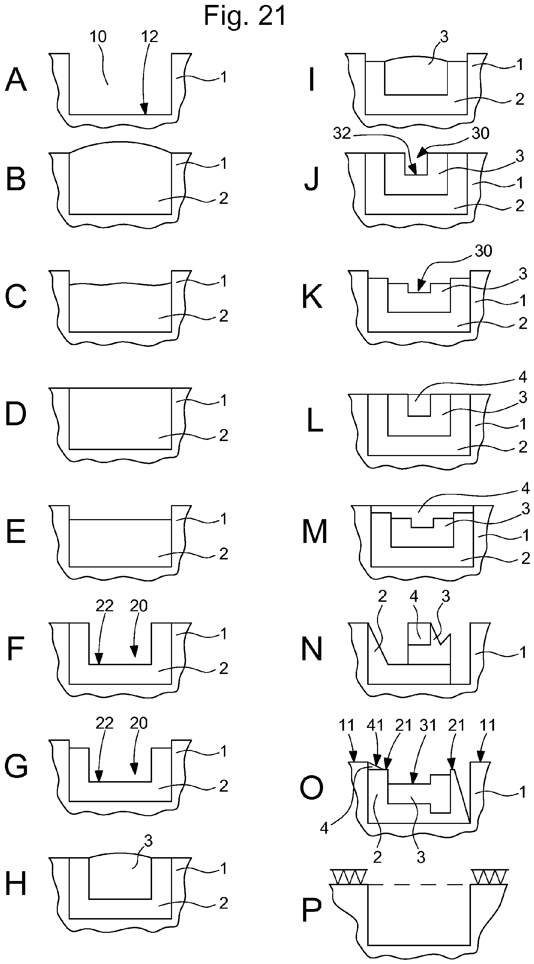

La figure 21 illustre différentes variantes d'exécution des opérations élémentaires qui ont été décrites, et montrant les différents niveaux relatifs entre les surfaces supérieures des différents inserts. Si les images L, M, P illustrent des composants finis avec une surface visible continue, voire rectifiée ou polie dans le cas de l'image P, les images I, J, K, N, O, montrent des surfaces d'inserts en retrait de la surface de la structure 1, et l'image H montre un insert saillant au-dessus de la surface de la structure 1.

En somme, l'invention permet de réaliser un composant multidécors et/ou multicolore, avec un graphisme qui peut être complexe, avec une grande précision, et avec une excellente garantie de tenue à l'usure. L'invention autorise tous les types de décors, avec des aplats, des dégradés, des inclusions, des reliefs saillants et/ou creux. L'invention permet aussi, dans certains cas, de s'affranchir des éléments d'affichage rapportés, tels qu'index et appliques, qui peuvent désormais être intégrés directement dans le décor global d'un cadran, d'une lunette, d'une boîte, ou autre.

En particulier l'invention permet de réaliser un décor en profondeur avec plusieurs couleurs. Ce procédé offre une grande précision dans le positionnement des couleurs et une définition très fine des arêtes, tel que visible sur la figure 16.

## Revendications

1. Procédé de fabrication d'un composant (100) hétérogène d'horlogerie, selon lequel on réalise une structure (1) en un premier matériau qui est un matériau dur ou une céramique, au moins une cavité primaire (10) dans ladite structure (1), lors de la réalisation de ladite structure, puis on remplit totalement ou partiellement ladite au moins une cavité primaire (10) d'un deuxième matériau d'aspect différent dudit premier matériau pour réaliser un insert primaire (2), procédé dans lequel on réalise, au moins dans l'épaisseur dudit deuxième matériau dudit insert primaire (2), au moins une cavité secondaire (20), qu'on remplit totalement ou partiellement d'un troisième matériau d'aspect différent dudit premier matériau ou/et dudit deuxième matériau pour réaliser un insert secondaire (3), **caractérisé en ce qu'**on effectue une reprise d'usinage ou d'usinage laser de la seule périphérie de cette dite cavité primaire (10), et **en ce qu'**on laisse le fond de cette dite cavité primaire (10) brut avant son remplissage par ledit deuxième matériau.

2. Procédé selon la revendication 1, **caractérisé en ce qu'**on réalise dans l'épaisseur dudit premier matériau ou/et dudit deuxième matériau ou/et dudit troisième matériau au moins une cavité tertiaire (30), qu'on remplit totalement ou partiellement d'un quatrième matériau d'aspect différent dudit premier matériau ou/et dudit deuxième matériau ou/et dudit troisième matériau, pour réaliser un insert tertiaire (4).

3. Procédé selon la revendication 1 ou 2, **caractérisé en ce qu'**on réalise une pluralité de chambres élémentaires, dans ladite structure (1) et au moins une partie d'inserts déjà réalisés, et **en ce qu'**on remplit lesdites chambres élémentaires de matériaux à chaque fois d'aspect différent de celui des surfaces limitrophes de ladite structure (1) ou desdits inserts, pour constituer une pluralité d'inserts élémentaires insérés au moins partiellement les uns dans les autres et remplis de matériaux d'aspect différent deux à deux.

4. Procédé selon la revendication 3, **caractérisé en ce qu'**on réalise au moins une chambre entre cuir et chair, ou bien à la fois dans ladite structure (1) et dans au moins un insert déjà réalisé, ou bien à la fois dans au moins deux autres inserts déjà réalisés.

5. Procédé selon l'une des revendications 1 à 4, **caractérisé en ce qu'**on grave les surfaces visibles desdits inserts réalisés dans ledit composant (100) pour constituer un bas-relief.

6. Procédé selon l'une des revendications 1 à 5, **caractérisé en ce qu'**on choisit comme dit deuxième matériau un matériau dur ou une céramique.

7. Procédé selon l'une des revendications 1 à 6, **caractérisé en ce qu'**on choisit le matériau d'au moins un dit insert, comportant un polymère ou une résine époxy ou une résine acrylate ou une résine chargée d'alumine ou une résine chargée de zircone.

8. Procédé selon l'une des revendications 1 à 7, **caractérisé en ce qu'**on choisit le matériau d'au moins un dit insert réalisé dans ledit composant (100) constitué par un émail.

9. Procédé selon l'une des revendications 1 à 8, **caractérisé en ce qu'**on choisit un matériau transparent ou translucide pour au moins un insert superficiel visible par l'utilisateur et recouvrant au moins un autre insert dudit composant (100).

10. Procédé selon l'une des revendications 1 à 9, **caractérisé en ce qu'**on choisit pour au moins un dit insert un matériau réfléchissant la lumière, ou un matériau fluorescent ou phosphorescent.

11. Procédé selon l'une des revendications 1 à 10, **caractérisé en ce qu'**on réalise au moins insert superficiel comportant un relief saillant au-dessus de la surface visible (11) de ladite structure (1) et constituant un élément d'affichage ou/et un élément à tact pour une préhension et/ou une identification tactile par l'utilisateur.

12. Procédé selon l'une des revendications 1 à 11, **caractérisé en ce qu'**on réalise au moins la finition de chaque dite cavité avec un laser femtoseconde et/ou picoseconde et/ou attoseconde.

13. Procédé selon l'une des revendications 1 à 12, **caractérisé en ce qu'**on réalise ladite structure (1) qui comporte, dans son épaisseur, au moins un dit insert primaire (2) et **en ce qu'**au moins un dit insert primaire (2) comporte, dans son épaisseur, au moins un dit insert secondaire (3).

14. Procédé selon l'une des revendications 1 à 13, **caractérisé en ce que** ledit composant (100) est une lunette de montre ou une boîte de montre ou un fond de montre ou une couronne de montre ou un poussoir de montre ou une glace de montre ou un élément de bracelet de montre ou un fermoir de bracelet de montre ou une corne de montre.

## Patentansprüche

1. Verfahren zur Herstellung einer heterogenen Komponente (100) für die Uhrmacherei, wobei eine Struktur (1) aus einem ersten Werkstoff ausgeführt ist, der ein harter Werkstoff oder eine Keramik ist, und mindestens ein primärer Hohlraum (10) in der Struktur (1), bei der Ausführung der Struktur, und danach der mindestens eine primäre Hohlraum (10) vollständig oder teilweise mit einem zweiten Werkstoff mit einem Aussehen, das sich von dem ersten Werkstoff unterscheidet, gefüllt wird; um einen primären Einsatz (2) auszuführen, wobei bei dem Verfahren mindestens in der Dicke des zweiten Werkstoffs des primären Einsatzes (2), mindestens ein sekundärer Hohlraum (20) ausgeführt wird, der vollständig oder teilweise mit einem dritten Werkstoff mit einem Aussehen, das sich von dem ersten Werkstoff und/oder dem zweiten Werkstoff unterscheidet gefüllt wird, um einen sekundären Einsatz (3) auszuführen, **dadurch gekennzeichnet, dass** eine Wiederaufnahme einer Bearbeitung oder einer Laserbearbeitung der einzigen Peripherie dieses primären Hohlraumes (10) durchgeführt wird, und dadurch, dass der Grund dieses primären Hohlraumes (10) vor dessen Füllung mit dem zweiten Werkstoff roh gelassen wird.

2. Verfahren nach Anspruch 1, **dadurch gekennzeichnet, dass** in der Dicke des ersten Werkstoffs oder/und des zweiten Werkstoffs oder/und des dritten Werkstoffs mindestens ein tertiärer Hohlraum (30) ausgeführt wird, der vollständig oder teilweise mit einem vierten Werkstoff mit einem Aussehen, das sich von dem ersten Werkstoff und/oder dem zweiten Werkstoff und/oder dem dritten Werkstoff unterscheidet gefüllt wird, um einen tertiären Einsatz (4) auszuführen.

3. Verfahren nach Anspruch 1 oder 2, **dadurch gekennzeichnet, dass** eine Vielzahl von elementaren Kammern in der Struktur (1), und mindestens einem Teil der bereits ausgeführten Einsätze ausgeführt werden, und dadurch, dass die elementaren Kammern mit Werkstoffen, jedes Mal mit einem Aussehen, das sich von jenem der angrenzenden Oberflächen der Struktur (1) oder der Einsätze unterscheidet, gefüllt werden, um eine Vielzahl von elementaren Einsätzen zu bilden, die mindestens teilweise ineinander eingesetzt, und mit Werkstoffen gefüllt werden, die paarweise unterschiedlich sind.

4. Verfahren nach Anspruch 3, **dadurch gekennzeichnet, dass** mindestens eine Kammer in der Zwischenzurichtung, oder aber zugleich in der Struktur (1) und in mindestens einem bereits ausgeführten Einsatz, oder aber zugleich in mindestens zwei anderen bereits ausgeführten Einsätzen ausgeführt wird.

5. Verfahren nach einem der Ansprüche 1 bis 4, **dadurch gekennzeichnet, dass** die sichtbaren Oberflächen der in der Komponente (100) ausgeführten Einsätze graviert werden, um ein Flachrelief zu bilden.

6. Verfahren nach einem der Ansprüche 1 bis 5, **dadurch gekennzeichnet, dass** als zweiter Werkstoff ein harter Werkstoff oder eine Keramik ausgewählt wird.

7. Verfahren nach einem der Ansprüche 1 bis 6, **dadurch gekennzeichnet, dass** der Werkstoff von mindestens einem Einsatz, der ein Polymer oder ein Epoxidharz oder ein Acrylatharz oder ein mit Aluminiumoxid beladenes Harz oder ein mit Zirkonoxid geladenes Harz beinhaltet, ausgewählt wird.

8. Verfahren nach einem der Ansprüche 1 bis 7, **dadurch gekennzeichnet, dass** der Werkstoff von mindestens einem Einsatz, der in der Komponente (100) ausgeführt wird, die aus einer Emaille gebildet ist, ausgewählt wird.

9. Verfahren nach einem der Ansprüche 1 bis 8, **dadurch gekennzeichnet, dass** ein durchsichtiger oder durchscheinender Werkstoff für mindestens einen oberflächlichen Einsatz ausgewählt wird, der von dem Nutzer sichtbar ist und mindestens einen anderen Einsatz der Komponente (100) abdeckt.

10. Verfahren nach einem der Ansprüche 1 bis 9, **dadurch gekennzeichnet, dass** für mindestens einen Einsatz ein Licht reflektierender Werkstoff, oder ein fluoreszierender oder phosporeszierender Werkstoff ausgewählt wird.

11. Verfahren nach einem der Ansprüche 1 bis 10, **dadurch gekennzeichnet, dass** mindestens ein oberflächlicher Einsatz ausgeführt wird, der ein Relief beinhaltet, das über die sichtbare Oberfläche (11) der Struktur (1) vorspringt und ein Anzeigeelement oder/und ein Taktelement zum Greifen und/oder eine taktile Identifizierung durch den Nutzer bildet.

12. Verfahren nach einem der Ansprüche 1 bis 11, **dadurch gekennzeichnet, dass** mindestens die Fertigstellung eines jeden Hohlraumes mit einem Femtosekunden und/oder Piksosenunden- und/oder Attosekunden-Laser ausgeführt wird.

13. Verfahren nach einem der Ansprüche 1 bis 12, **dadurch gekennzeichnet, dass** die Struktur (1), die in ihrer Dicke mindestens einen primären Einsatz (2) beinhaltet, ausgeführt wird, und dadurch, dass mindestens ein primärer Einsatz (2) in seiner Dicke mindestens einen sekundären Einsatz (3) beinhaltet.

14. Verfahren nach einem der Ansprüche 1 bis 13, **dadurch gekennzeichnet, dass** die Komponente (100) ein Aussenring einer Uhr oder ein Uhrgehäuse oder ein Uhrboden oder eine Uhrkrone oder ein Uhrdrücker oder ein Uhrglas oder ein Element eines Uhrarmbandes oder eine Schliesse eines Uhrarmbandes oder ein Uhrhorn ist.

## Claims

1. Method for manufacturing a heterogeneous horological component (100), according to which a structure (1) made of a first material, which is a hard material or a ceramic, is obtained, and at least one primary cavity (10) in the said structure (1) is produced when producing said structure (1), then said at least one primary cavity (10) is fully or partially filled with a second material that is different in appearance from said first material in order to produce a primary insert (2), method in which, at least in the thickness of said second material of said primary insert (2), at least one secondary cavity (20) is produced, which is fully or partially filled with a third material that is different in appearance from said first material and/or from said second material in order to produce a secondary insert (3), **characterized in that in that** only the periphery of this said primary cavity (10) is re-machined or laser machined, and **in that** the bottom of this said primary cavity (10) is left rough before being filled with said second material.

2. Method according to claim 1, **characterised in that** at least one tertiary cavity (30) is produced in the thickness of said first material and/or of said second material and/or of said third material, which tertiary cavity (30) is fully or partially filled with a fourth material that is different in appearance from said first material and/or from said second material and/or from said third material, in order to produce a tertiary insert (4).

3. Method according to claim 1 or 2, **characterised in that** a plurality of basic chambers are produced in said structure (1) and at least part of inserts already produced, and **in that** said basic chambers are filled with materials, the appearances of each whereof are different from those of the adjoining surfaces of said structure (1) or of said inserts, in order to form a plurality of basic inserts at least partially inserted into one another and filled with materials having different appearances in sets of two.

4. Method according to claim 3, **characterised in that** at least one chamber is intercalated, or is inserted both in said structure (1) and in at least one insert already produced, or both in at least two other inserts already produced.

5. Method according to one of claims 1 to 4, **characterised in that** the visible surfaces of said inserts produced in said component (100) are engraved so as to form a low relief.

6. Method according to one of claims 1 to 5, **characterised in that** said second material is chosen from a hard material or a ceramic.

7. Method according to one of claims 1 to 6, **characterised in that** the material of at least one said insert is chosen from a polymer or an epoxy resin or an acrylate resin or an alumina-filled resin or a zirconia-filled resin.

8. Method according to one of claims 1 to 7, **characterised in that** an enamel is chosen to form the material of at least one said insert made in said component (100).

9. Method according to one of claims 1 to 8, **characterised in that** a transparent or translucent material is chosen for at least one superficial insert visible to the user and covering at least one other insert of said component (100).

10. Method according to one of claims 1 to 9, **characterised in that** a light-reflecting material, or a fluorescent or phosphorescent material is chosen for at least one said insert.

11. Method according to one of claims 1 to 10, **characterised in that** at least one superficial insert comprising a relief projecting from the visible surface (11) of said structure (1) is produced and constitutes a display element and/or a touch element for grasping and/or tactile identification by the user.

12. Method according to one of claims 1 to 11, **characterised in that** at least the finish of each said cavity is carried out using a femtosecond laser and/or a picosecond laser and/or an attosecond laser.

13. Method according to one of claims 1 to 12, **characterized in that** said structure (1) is produced which comprises in its thickness at least said primary insert (2), and that at least said primary insert (2) comprises in tis thickness at least a secondary insert (3).

14. Method according to one of claims 1 to 13, **characterized in that** said component (100) watch bezel, a watchcase, a watch back, a watch crown, a watch push-piece, a watch crystal, a watch bracelet element, a watch bracelet clasp, or a watch horn.
